Europäisches Patentamt

European Patent Office

Office européen des brevets

(19)

(11) Publication number: **0 080 831**

**A1**

(12) **EUROPEAN PATENT APPLICATION**

(21) Application number: **82306137.9**

(22) Date of filing: **18.11.82**

(51) Int. Cl.³: **B 60 K 5/12**
**B 60 K 17/00**

(30) Priority: **27.11.81 GB 8135824**

(43) Date of publication of application:
**08.06.83 Bulletin 83/23**

(84) Designated Contracting States:
**AT BE DE FR GB IT NL SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Parsons, David**
**125 Clinton Lane**
**Kenilworth Warwickshire(GB)**

(74) Representative: **Farrow, Robert Michael**
**Patent Department Automotive Products plc Tachbrook Road**
**Leamington Spa Warwickshire CV31 3ER(GB)**

(54) Improvements in or relating to engine mountings.

(57) A journal bearing (17) is provided between the engine block (11) and transmission casing (13) of a motor vehicle engine and transmission unit. The bearing maintains the engine and transmission in driving alignment, torque reaction from the block (11) being taken by engine mountings (18) and torque reaction from the casing (13) by transmission mountings (20).

EP 0 080 831 A1

"IMPROVEMENTS IN OR RELATING TO ENGINE MOUNTINGS"

This invention relates to engine mountings particularly though not exclusively for motor vehicles.

In motor vehicles engine mountings usually incorporate a rubber component to insulate the body structure from engine vibration. Front-engine front-wheel-drive vehicles commonly use the engine mountings to react final drive torque to the vehicle body.

In order to make motor vehicle travel more comfortable, designers have been seeking to reduce noise levels in the passenger compartment and particular attention has been paid to engine mountings. This study, commonly known under the heading of N.V.H. (noise, vibration and harshness) has become quite important.

One way of reducing N.V.H. transmissions to the body structure is to adopt softer engine mountings. Unfortunately this increases engine movement under drive torque reaction and so requires greater space in the engine bay and more flexible hose and cable connections.

A further disadvantage of soft mountings, especially in small vehicles, is that they promote an undesirable phenomenon termed 'shunt' where movement of the engine is noticeable to the vehicle driver and can adversely affect driveability of the vehicle (see for example AUTOCAR 17th October, 1981, Page 17).

Thus engine mountings are presently called upon to perform two tasks, reaction of final drive torque which requires relatively hard mountings and reduction of N.V.H. transmissions which requires relatively soft mountings.

The present invention seeks to overcome the aforementioned problems by substantially relieving the engine mountings of one task. This consequently enables the mountings to be optimised for the remaining task. One way of carrying this into effect is to utilise a short universally jointed shaft between an engine and gearbox, the gearbox mountings reacting final drive torque. This solution has been proposed for buses but is impractical for front engine, front wheel drive cars because of the space required.

According to the present invention there is provided a motor vehicle engine and transmission unit having resilient mountings for supporting the unit in a vehicle body to both react final drive torque and cushion the unit in the body characterised thereby that a journal bearing is effectively provided between the engine block and transmission casing to maintain the engine and transmission in driving alignment, independent sets of mountings being provided for the engine and transmission.

By transmission is meant the usual clutch gearbox and final drive unit associated with front wheel drive vehicles.

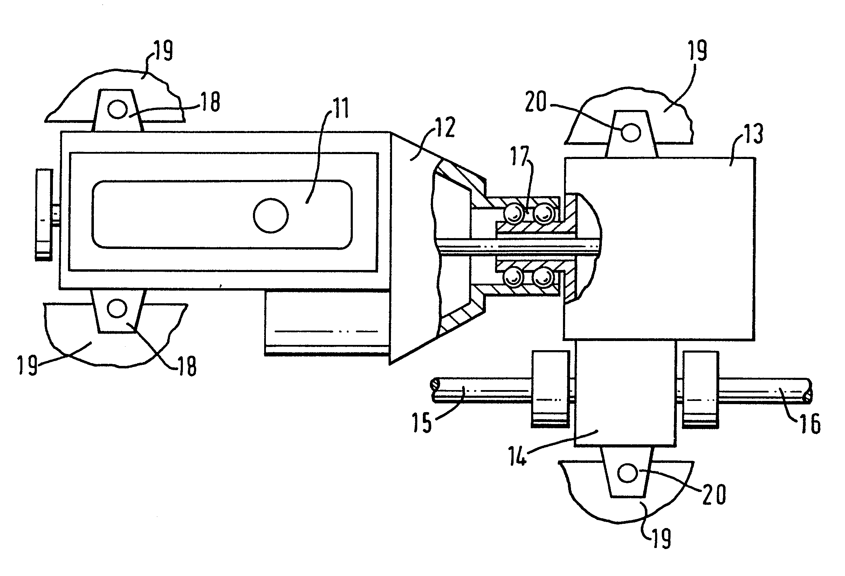

Other features of the invention are included in the following description of a preferred embodiment shown, by way of example only, in the accompanying drawing which is a part-sectional plan view of an improved engine mounting arrangement according to the invention.

An engine/transmission unit suitable for a front wheel drive car comprises the engine 11, clutch housing 12, gearbox 13, differential gear 14 and driveshafts 15,16. A rolling element bearing 17 connects the clutch housing 12 to the casing of the of the gearbox 13. This arrangement ensures accurate alignment between the gearbox and clutch housing whilst relieving the engine mountings of the task of drive line torque reaction. Thus the engine mountings 18 can be made of relatively soft rubber to minimise N.V.H. transmissions to the body structure 19 whilst the gearbox mountings 20 can be made of relatively hard rubber to react final drive torque whilst limiting gearbox movement.

Clearly some slight N.V.H. transmission from the engine 11 through the bearing 17, gearbox 13 and mountings 20 may be inevitable, but the proposed arrangement offers a substantially improvement over existing mounting layouts. Careful design can minimise N.V.H. transmission through the bearing 17 to an absolute minimum.

The engine block will react engine torque indirectly through the gas in each cylinder, so the present invention avoids direct connection and substantially relieves the drive line of the inertial load of the block thus reducing or eliminating 'shunt'. The typical ratio of torque reaction to the mountings in first gear is about 15:1.

The bearing 17 has been described as between the clutch housing 12 and gearbox 13. It could be placed elsewhere, for example between the clutch housing 12 and the engine 11, so long as adequate mountings for reacting final drive torque are provided.

-5-

## Claims

1.      A motor vehicle engine and transmission unit having resilient mountings for supporting the unit in a vehicle body to both react final drive torque and cushion the unit in the body characterised thereby that a journal bearing (17) is effectively provided between the engine block (11) and transmission casing (13) to maintain the engine and transmission in driving alignment, independent sets of mountings (18,20) being provided for the engine and transmission.

2.      A unit according to Claim 1, characterised thereby that the journal bearing (17) further maintains the engine block (11) and transmission casing (13) in axial juxtaposition.

3.      A unit according to Claim 2, characterised thereby that the bearing (17) is a rolling element bearing.

4.        A unit according to Claim 3 characterised thereby that the independent mountings (18) for said engine block (11) are substantially softer than the independent mountings (20) for said transmission casing (13).

# EUROPEAN SEARCH REPORT

0080831

Application number

EP 82 30 6137

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 300 649 (M. SAKATA) <br> * Column 2, lines 12-32, column 3, line 15 - column 4, line 5; figure 1 * | 1 | B 60 K 5/12 <br> B 60 K 17/00 |
| A | * Claim 1 * | 4 | |
| Y | US-A-1 970 156 (H.C. WANNER) <br> * Complete document * | 1 | |
| Y | US-A-1 845 393 (C.J. BOCK) <br> * Claim 4; figures 1, 2 * | 1 | |
| Y | DE-C- 441 786 (H.A. VIOLET) <br> * Page 2, lines 86-122; figure 3 * | 1 | TECHNICAL FIELDS SEARCHED (Int. Cl. ³) <br><br> B 60 K 5/00 <br> B 60 K 17/00 |

The present search report has been drawn up for all claims

| Place of search | Date of completion of the search | Examiner |
|---|---|---|
| BERLIN | 04-02-1983 | PETTI P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82